# EUROPÄISCHE PATENTANMELDUNG

(11) **EP 0 887 571 A2**
(43) Veröffentlichungstag der Anmeldung: **30.12.1998**
(21) Anmeldenummer: 98107112.9
(22) Anmeldetag: 18.04.1998
(51) Int. Cl.: F16D 65/12

(54) **Bremsscheibe**

(30) Priorität: 27.06.1997 DE 19727333
(71) Anmelder: Dr.Ing.h.c. F. Porsche Aktiengesellschaft, 70435 Stuttgart (DE)
(72) Erfinder: Martin, Roland, 71287 Weissach (DE)

(57) **Zusammenfassung**

Bei einer Bremsscheibe, insbesondere einer innenbelüfteten Bremsscheibe (1) mit mindestens einem Reibring (2) ist dieser über Befestigungsschrauben (4) mit einem Bremsscheibentopf (5) verbunden.

Die Befestigungsschraube (4) ist jeweils mit einem zylindrischen Ansatz (8) versehen, an dem sich endseitig ein Gewindeteil (10) anschließt. Der zylindrische Ansatz (8) der Befestigungsschraube (4) ist in einer Bohrung (9) des Reibringes (2) angeordnet und das Gewindeteil (10) der Schraube (4) ist in den Bremsentopf (5) einschraubbar.

## Beschreibung

Die Erfindung bezieht sich auf eine Bremsscheibe nach dem Oberbegriff des Anspruchs 1.

Aus der DE 44 46 017 A1 ist eine innenbelüftete Bremsscheibe bekannt, die zweigeteilt ausgebildet ist und aus einem Bremsentopf sowie den Reibringen besteht. Über Schrauben werden die Reibringe mit dem Bremsentopf verbunden. Die Schrauben sind hierzu in einer Hülse angeordnet, die als Bundbuchse ausgebildet ist und der Bund sich am Topf und der Schraubenkopf an den Reibscheiben abstützt. Zwischen der Bundbuchse und dem Schraubenkopf kann eine Tellerfeder angeordnet sein.

Aufgabe der Erfindung ist es, eine verbesserte zweigeteilte Bremsscheibe zu schaffen, die mittels Bolzen verbindbar ist und neben einer axialen Bedämpfung ein Ausgleich von thermischen Spannungen gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß aufgrund der Zwischenschaltung einer Tellerfeder im Zusammenspiel und in Abstimmung mit einem Dämpfungselement zwischen den Bremsenteilen eine zusätzlich definierte hohe axiale Dämpfung möglich wird. Eine Grunddämpfung wird hauptsächlich über die Tellerfeder erzielt.

Diese Tellerfeder ermöglicht eine definierte Vorspannung und einen Ausgleich von thermischen Spannungen zwischen beiden Bremsenteilen. Damit auch ein radialer Spielausgleich erfolgen kann, ist die Befestigungsschraube in einer Wellhülse gelagert.

Insbesondere wird durch diese Wellhülse eine Temperaturausdehnung kompensiert, da der Bremsentopf relativ kalt und die Reibscheiben relativ heiß sind.

Ein Ausführungsbeispiel der Erfindung ist in der Zeichnung dargestellt und wird im folgenden näher beschrieben. Es zeigen
- Fig. 1: einen Schnitt durch eine Bremsscheibe sowie eine Verbindung über eine Befestigungsschraube und
- Fig. 2: eine in einem Wellrohr gehaltene Befestigungsschraube im Schnitt.

Eine Bremsscheibe 1 einer Scheibenbremse umfaßt im wesentlichen zwei Reibringe 2, 3, die innenbelüftet sind und über Befestigungsschrauben 4 mit einem Bremsentopf 5 verbunden sind. Die Verbindung des Bremsentopfes 5 mit der Bremsscheibe 1 erfolgt über Befestigungsringe 6, 7 des Bremsentopfes und des Reibringes 2.

Die Befestigungsschraube 4 weist einen zylindrischen Ansatz 8 auf, der im Bereich einer Bohrung 9 im Befestigungsring 7 angeordnet ist. Anschließend an den Ansatz 8 der Befestigungsschraube 4 ist endseitig der Schraube ein Gewindeabschnitt 10 vorgesehen, der in ein Gewinde des Befestigungsringes 6 des Bremsentopfes 5 einschraubbar ist. Gegenüberliegend des Gewindeabschnittes 10 der Befestigungsschraube ist der Schraubenkopf 12 angeordnet.

Dieser Schraubenkopf 12 stützt sich unter Zwischenschaltung eines Federelementes 17, wie beispielsweise eine Tellerfeder, am Befestigungsring 7 des Reibringes 2 ab. Desweiteren stützt sich ein Absatz 13 des zylindrischen Ansatzes 8 an der Innenfläche 14 des Befestigungsringes 6 ab.

Zwischen den gegenüberstehenden Innenflächen 14 und 14a der Befestigungsringe 6 und 7 des Topfes 5 und des Reibringes 2 ist ein Dämpfungselement 15, beispielsweise ein elastisch beschichtetes Dämpfungsblech angeordnet.

Der zylindrische Absatz 8 der Befestigungsschraube 4 kann innerhalb der Bohrung 9 in einer Wellblechhülse 16 gelagert sein, wie insbesondere Fig. 2 näher zeigt.

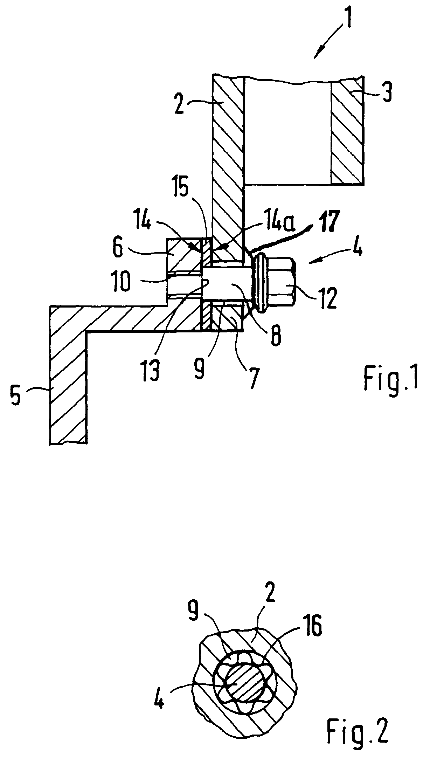

In Fig. 1 ist der Schraubenkopf 12 innenseitig der Bremsscheibe 1 angeordnet. Eine gleiche Wirkung ergibt sich, wenn der Schraubenkopf 12 mit der Tellerfeder 17 am Bremsentopf 5 angeordnet wird und der Gewindeabschnitt 10 der Schraube 4 in dem Befestigungsring 7 festgesetzt wird.

## Patentansprüche

1. Bremsscheibe, insbesondere innenbelüftete Bremsscheibe mit mindestens einem Reibring, der über Befestigungsschrauben mit einem Bremsscheibentopf verbunden ist, dadurch gekennzeichnet, daß die Befestigungsschrauben (4) jeweils einen zylindrischen Ansatz (8) mit einem endseitigen Gewindeteil (10) aufweisen und der zylindrische Ansatz (8) in einer Bohrung (9) des Reibringes (2) liegt und das Gewindeteil (10) in den Bremsentopf (5) einschraubbar ist.

2. Bremsscheibe nach Anspruch 1, dadurch gekennzeichnet, daß ein Schraubenkopf (12) an der Innenseite des Reibringes (2) angeordnet ist und sich zum Reibring (2) über eine Tellerfeder (17) abstützt.

3. Bremsscheibe nach den Ansprüchen 1 oder 2, dadurch gekennzeichnet, daß zwischen gegenüberstehenden Anlageflächen (14, 14a) des Bremsentopfes (5) und des Reibringes (2) ein Dämpfungselement (15) angeordnet ist.

4. Bremsscheibe nach den Ansprüchen 1, 2 oder 3, dadurch gekennzeichnet, daß der zylindrische Ansatz (8) der Befestigungsschraube (4) in einer Wellhülse (16) angeordnet ist.

5. Bremsscheibe nach den Ansprüchen 1, 2, 3 oder 4, dadurch gekennzeichnet, daß der zylindrische Ansatz (8) der Befestigungsschraube (4) über die Bohrung (9) der Reibscheibe (2) hinaussteht und die Stirnfläche des Ansatzes (13) einen Anschlag bildet.
